# EUROPEAN PATENT APPLICATION

(11) **EP 4 585 524 A1**
(43) Date of publication of application: **16.07.2025**
(21) Application number: 24154972.4
(22) Date of filing: 31.01.2024
(51) Int. Cl.: B64U 10/60, B64F 1/02, B64F 1/08, B64F 1/10, B64F 3/00, B64U 10/25, B64U 70/99, B64U 80/86, B64U 70/90, B64F 1/12, B64U 101/10

(54) **AN AIRCRAFT AND TETHERED SUPPORT VEHICLE SYSTEM, METHOD OF OPERATING THE SAME FOR CIRCULAR TAKE-OFF AND LANDING OF THE AIRCRAFT AND USE THEREOF**

(30) Priority: 12.01.2024 PT 2024119211
(71) Applicant: Universidade Do Porto, 4099-002 Porto (PT)
(72) Inventor: da Costa Castro e Fontes, Fernando Arménio, 4200-465 PORTO (PT); de Freixo Ramos Paiva, Luís Tiago, 4200-465 PORTO (PT); de Matos Fernandes, Manuel Côrte-Real, 4200-465 PORTO (PT); Vinha, Sérgio Emanuel Costa, 4200-465 PORTO (PT)
(74) Representative: RCF - Protecting Innovation, S.A.

(57) **Abstract**

The present invention relates to an aircraft and tethered support vehicle system for circular take-off and landing of an aircraft, the system comprising at least one aircraft (14), at least one support vehicle (10), an anchorage pole (00), at least one vehicle tether (01), an aircraft magnet and a vehicle electromagnet (12). The invention also refers to a method of operating the aircraft and tethered support vehicle system and use of the same on an airborne wind energy system for the generation of electrical energy.

## Description

### TECHNICAL FIELD

The present invention relates to an aircraft and tethered support vehicle system, a method of operating the same for circular take-off and landing of the aircraft. This invention applies to Airborne Wind Energy Systems.

### BACKGROUND

Airborne Wind Energy Systems (AWES) are devices that can harvest wind energy at high altitudes, where the wind is stronger and more consistent, being able to generate electricity from a yet unexplored renewable energy resource. AWES use a much lighter infrastructure than the conventional wind turbines, since the tower and foundations are not needed and are replaced by a tether. (See e.g. [Chris Vermillion, Mitchell Cobb, Lorenzo Fagiano, Rachel Leuthold, Moritz Diehl, Roy S. Smith, Tony A. Wood, Sebastian Rapp, Roland Schmehl, David Olinger, and Michael Demetriou. "Electricity in the Air: Insights from Two Decades of Advanced Control Research and Experimental Flight Testing of Airborne Wind Energy Systems", Annual Reviews in Control, 2021; Schmehl, Roland. "Airborne Wind Energy: Advances in Technology Development and Research", Springer Singapore, 2018] for an overview of the concepts, [KiteGen Research, "High Altitude Wind Energy IP right ownership world overview", 2014; Mendonça, Anny Key de Souza, et al. "Comparing patent and scientific literature in airborne wind energy." Sustainability 9.6 (2017): 915] for IP surveys, or [EC-DG for R&I, "Study on Challenges in the commercialization of airborne wind energy systems", European Commission Directorate-General for Research and Innovation, September 2018. ISBN 978-92-79-80282-9, DOI 10.2777/87591; United States Department of Energy, "Challenges and Opportunities for Airborne Wind Energy in the United States". Report to the Congress, November 2021] for reports on challenges and opportunities).

One of the main challenges for AWES to become a viable and competitive technology, as is recognized by the research community (e.g., in the EC report [EC-DG for R&I, "Study on Challenges in the commercialization of airborne wind energy systems", European Commission Directorate-General for Research and Innovation, September 2018. ISBN 978-92-79-80282-9, DOI 10.2777/87591], in the report to the US Congress [United States Department of Energy, "Challenges and Opportunities for Airborne Wind Energy in the United States". Report to the Congress, November 2021] and in the survey [Chris Vermillion, Mitchell Cobb, Lorenzo Fagiano, Rachel Leuthold, Moritz Diehl, Roy S. Smith, Tony A. Wood, Sebastian Rapp, Roland Schmehl, David Olinger, and Michael Demetriou. "Electricity in the Air: Insights from Two Decades of Advanced Control Res]), is the ability to operate safely, reliably, and autonomously for long periods of time in several weather and environmental conditions. To achieve such a goal, it is crucial to develop Automatic Take-Off and Landing (ATOL) schemes for the Tethered Aircraft (also denoted by kites).

Fixed-wing aircraft are used in several applications in which it is relevant to have a mechanism to take-off and landing (TOL) in short areas or automatically, using techniques denoted by STOL (Short Take-Off and Landing) or ATOL, respectively. Among the several STOL or ATOL concepts, three types are being investigated and developed in the context Airborne Wind Energy Systems AWES: (i) vertical TOL (VTOL) with multiple rotors, (ii) Catapult Assisted Take-Off with Barrier Arrested Recovery (CATOBAR), and (iii) circular TOL (CTOL).

The third concept, the circular TOL (also denoted by Rotating TOL) is the one least investigated. A comparison of the three automatic TOL concepts is reported by Enerkite researchers in [Burkhard Rieck, Maximilian Ranneberg, Ashwin Candade, Alexander Bormann, Stefan Skutnik. "Comparison of Launching & Landing Approaches". International Airborne Wind Energy Conference (AWEC 2017). 2017, Freiburg, Germany], emphasizing the advantages of CTOL in terms of high-capacity factor, ability to cope with change in wind conditions, scalability, and behaviour in case of airborne system failure.

Within CTOL there is a concept that uses a rigid rotating arm and a concept that uses a landing gear. The research work in Univ. Sant'Anna, Italy, uses tethered motorized drones with landing gear [Antonello Cherubini, "Automatic control line flight for jetstream altitude wind power", https://www.youtube.com/watch?v=PaeCZ72ghRQ&t=55s], while the company EnerKite, Germany, uses a motorized rotating arm to lift a wing without self-propulsion [Enerkite, EK 200 technical data sheet, https://www.enerkite.de/downloads/EnerKite_200_Technical_Data_EN _SM.pdf].

The above solutions of the state of the art are mostly with the use of a rotating arm or a landing gear, which have several disadvantages, namely:
- a landing gear would add weight to the aircraft;
- if the landing gear is not retractable, it would add drag to the aircraft; if it is retractable, it adds even more weight and additional complexity to the system;
- a rotating arm, when compared to a tether, is a heavy and complex structure, that is not so easy to make portable. Enerkite has a 30 kW prototype with a telescopic rotating arm mounted on top of a truck; it is planning a 100 kW prototype mounted on a 20ft HQ container; it is not easy to scale up from these prototypes while maintaining portability;
- with a rigid rotating arm, it is not easy to adjust the radius of the circular path, adapting it to the available area, to a specific aircraft, to the payload, or to a specific wind condition.

The additional weight or additional drag of the aircraft has a significant negative impact on the efficiency of the system when used in an AWES to generate electrical energy. Moreover, for AWES that are to be used off-grid (most of the ones developed at current stage of the technology), portable and easy to deploy systems are of advantage.

Therefore, there is the need of a system and method for the circular take-off and landing of aircraft without requiring the use of a landing gear or a rotating arm, with application to Airborne Wind Energy Systems.

### BRIEF DESCRIPTION OF THE DRAWINGS

The invention will now be described in further detail with reference to the accompanying drawings in which:
Fig. 1: illustrates a preferred embodiment of the aircraft (14) placed on the support vehicle (10).
Fig. 2: illustrates a general schematic of the aircraft (14) placed on the support vehicle (10) linked to the anchorage point/pole (00) describing a circular path.
Fig. 3 illustrates the embodiment of the support vehicle (10) for a tethered aircraft.
Fig. 4 illustrates the embodiment of multiple aircraft and support vehicle (10) (two in this case) sharing the same circular path, which can take-off and land simultaneously.

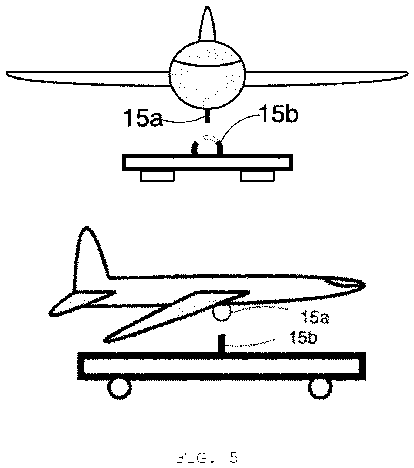

Fig. 5 illustrates an embodiment of a mechanical seizing device with a hook (15a) and pin (15b) to hold the aircraft and vehicle connected. In this embodiment the hook (15a) is placed in the aircraft and the pin (15b) is placed in the vehicle.

### SUMMARY OF THE INVENTION

The present invention relates to an aircraft and tethered support vehicle system for circular take-off and landing of an aircraft, comprising at least one aircraft (14), at least one support vehicle (10), an anchorage pole (00) and at least one vehicle tether (01),
wherein
- the support vehicle (10) is connected to the anchorage pole (00) via the vehicle tether (01),
- the support vehicle (10) comprises a vehicle electromagnet (12) arranged on a top part thereof,
- the aircraft (14) comprises an aircraft magnet (13) arranged on a bottom part thereof, and
the vehicle electromagnet (12) and the aircraft magnet (13) are configured to connect the support vehicle (10) to the aircraft (14) or to disconnect them or, as an alternative, a seizing device with a hook (15a) and pin (15b) is used to connect the support vehicle (10) to the aircraft (14) or to disconnect them.

In one aspect of the present invention, the support vehicle (10) is a cart-like vehicle or a boat-like vehicle.

In other aspect of the present invention, the support vehicle (10) further comprises a motor, sensors, and a control software.

In a further aspect, the aircraft (14) is connected to the anchorage pole (00) via an aircraft tether (02).

In another aspect, the aircraft (14) is connected to a winch (20) via an aircraft tether (02), wherein the aircraft tether (02) goes through the interior of the anchorage pole (00) and it connects to the winch (20) downstream the anchorage pole (00).

The present invention also refers to a method of operating the aircraft and tethered support vehicle system, comprising the following steps
for taking-off and flying:
   a) connecting the support vehicle (10) to the aircraft (14) by switching on the electromagnet (12) so as to attract the magnet (13) of the aircraft (14), or by locking the hook (15a) and pin (15b);
   b) accelerating the support vehicle (10) until a threshold take-off speed is attained;
   c) disconnecting the aircraft (14) from the support vehicle (10) by switching off the electromagnet (12), or by unlocking the hook (15a) and pin (15b), so as to the aircraft (14) becomes airborne gaining altitude;
   d) decelerating the support vehicle (10) until it stops;
for descending and landing:
   e) accelerating the support vehicle (10) while decreasing the altitude of the aircraft (14);
   f) reaching equal curvature radius for a circular motion of the aircraft (14) and support vehicle (10);
   g) aligning vertically the electromagnet (12) of the support vehicle (10) with the magnet (13) of the aircraft (14), or the pin (15b) of the support vehicle (10) with the hook (15a) of the aircraft (14), and synchronizing the speeds of both support vehicle (10) and aircraft (14);
   h) connecting the aircraft (14) to the support vehicle (10) by switching on the electromagnet (12), or by locking the hook (15a) and pin (15b), when the aircraft (14) is at an appropriate altitude and position;
   i) decelerating the support vehicle (10) until it stops.

In one aspect, the steps a) to i) are executed automatically by a control system.

In another aspect, the steps f) and g) are executed by the control system comprising controllers that are based on Kuramoto synchronization dynamics.

In a further aspect, the method of operating the aircraft and tethered support vehicle system further comprises the following steps when the aircraft and tethered support vehicle system comprises two or more aircrafts (14) and two or more support vehicles (10):
- maintaining the two or more aircrafts (14) and the two or more support vehicles (10) uniformly spaced in terms of angular position,
- synchronizing speeds and curvature radius among the said aircrafts (14) and support vehicles (10), and
- synchronizing altitudes among all said aircrafts (14).

The present invention also refers to the use of the aircraft and tethered support vehicle system on an airborne wind energy system for the generation of electrical energy.

### DETAILED DESCRIPTION OF THE INVENTION

The present invention relates to an aircraft and tethered support vehicle system for circular take-off and landing of the aircraft, in particular for its use in airborne wind energy systems.

The present disclosure describes a support vehicle (10) that serves as berth during circular take-off and landing. This support vehicle (10) avoids the need to carry onboard a landing gear that would increase the weight of the aircraft, and avoids the use of a rigid rotating arm. The support vehicle (10), possibly with wheels, possibly tethered to the same anchorage pole (00), includes a magnetic catch/release mechanism to be switched during the take-off or landing instant, further increasing the control over the timing of the take-off or landing instant. This disclosure also describes a control method to align (synchronize) the angular positions of the support vehicle (10) and the aircraft (14) during landing.

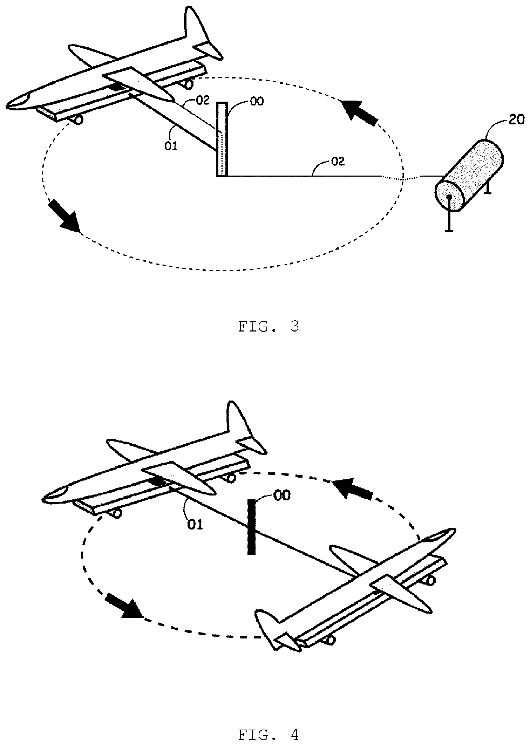

The system can be used with more than one aircraft and support vehicle pairs, which can take-off or land simultaneously (see Figure 4).

The proposed support vehicle (10) could be used outside the scope of AWES, addressing non-tethered aircraft or using a non-tethered support vehicle.

The main technical difference of the proposed invention with respect to existent circular take-off and landing (CTOL) system is the fact that the latter either use a rotating arm or a landing gear, while the herein disclosed uses a support vehicle (10) instead.

The proposed system and method enable the autonomous take-off and landing (TOL) of an aircraft (14), using a circular TOL (CTOL) technique, and using a support vehicle (10) in place of a rotating arm or a landing gear.

When comparing CTOL with alternative TOL techniques, the following technical advantages of the circular TOL technique can be identified:
- The TOL process can be fully automated,
- It enables use of light weight aircraft (no need to carry powerful motors and high-capacity batteries as in the case of VTOL solutions), resulting in energy systems with higher capacity factor and with higher efficiency.
- It has a reduced complexity of the ground-station module (when compared to CATOBAR solutions),
- It can be operated in several weather conditions (without wind, with rapid changing winds, gusts, or turbulence),
- It is deployable in small areas,
- It enables the use of multiple-kites with single-tether systems,
- It is a scalable technology in terms of number of units and in terms of the size of each unit.

Additionally, several advantages can be identified by the use of a support vehicle instead of a landing gear:
- removes the need to use a landing gear, reducing the weight and complexity of the airborne system (aircraft),
- can use energy from the support vehicle itself, instead of the aircraft, while accelerating (can use a lighter battery and a less powerful motor).

With respect of the use of a support vehicle instead of a rotating arm, the following advantages can be identified:
- Portable design (easy transportation, can be placed in different locations, can be rapidly deployed),
- The radius of the circular path can be easily adjusted (can be adapted to the area available, can be adapted to different aircraft, different payloads, different wind conditions requiring different takeoff or landing speeds).

Additional advantages are:
- No fixed rail needed,
- Can be placed on water, in this case the support vehicle is a boat-like vehicle,
- Can be used with more than one kite taking-off and landing simultaneously.

Therefore, the proposed invention relates to an aircraft and tethered support vehicle system for autonomous circular take-off and landing of the aircraft and a method of operating it that allows circular take-off and landing of an aircraft, without the need of a rotating arm nor of a landing gear.

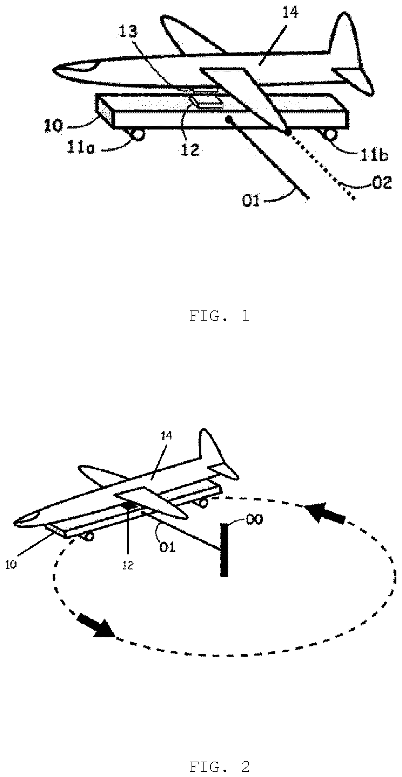

A preferred embodiment for the system is represented in Figure 1 (zoom in) and Figure 2 (zoom out).

An aircraft (14) is placed above the support vehicle (10). The support vehicle (10) (that might have several wheels (11a, 11b), (or only one wheel with rigid tether) supports the aircraft (14) via an electro-magnet (12) placed above the support vehicle (10). Then, under the aircraft (14) another magnet (13) is fixed. Alternatively, instead of using an electromagnet and magnet, a mechanic seizing device with a hook (15a) and pin (15b) can be used. The support vehicle (10) is linked to the anchorage point/pole (00) via the support vehicle tether (01).

In an additional embodiment, for tethered aircrafts, these are linked to the anchorage pole (00) via the aircraft tether (02). A possible configuration for tethered aircrafts is represented in Figure 3. The aircraft (14) is connected to the anchorage point/pole (00) via the aircraft tether (02) which goes through the interior of the anchorage pole (00) and reels in or out via a winch (20) (part of the ground-station) that can be inside or outside the circular support vehicle (10) path.

The system disclosed here, can also include more than one aircraft and support vehicle pairs, with each pair sharing the same circular path, the same anchorage pole, and taking-off or landing simultaneously (Figure 4 illustrates an embodiment with two of such pairs). The aircraft and support vehicle pairs should maintain equally spaced angular distances between them, as well as synchronizing angular speeds, synchronizing curvature radius, and altitudes.

Table 1 specifies the components of the aircraft and tethered support vehicle system and the correspondent functions.

**Table 1: Functions of the components of the aircraft and tethered support vehicle system.**

| Components | Functions |
|---|---|
| Aircraft (14) | The fixed-wing aircraft (14) can be tethered or not, can have self-propulsion or not. |
| Support vehicle (10) | It contains wheel (s) (11a and 11b), electric motor and an electromagnet (12). |
| | It is attached to a tether (01) that allows the movement of the support vehicle (10) with a circular trajectory. The support vehicle (10) supports the weight of the aircraft (14). |
| Wheel (s) (11a and 11b) | It allows the movement of the support vehicle (10). |
| Aircraft magnet (13) + support vehicle electromagnet (12) | The electromagnet (12) is placed on the top of the support vehicle (10), while the magnet (13) is placed on the bottom of the aircraft. When the electromagnet (12) is in attraction, the support vehicle (10) and the aircraft (14) are connected. When the electromagnet (12) is in repulsion, the aircraft (14) and the support vehicle (10) are not connected. |
| Seizing device with a hook (15a) and pin (15b) | The seizing device with a hook (15a) and pin (15b) is an alternative to the Aircraft magnet (13) and vehicle electromagnet (12). It has the function to securely connect the aircraft to the vehicle when it is locked and release the connection when unlocked. |
| Support vehicle tether (01) | It connects the support vehicle (10) to the anchorage pole (00). |
| Anchorage pole (00) | It is in the centre of the circular take-off circle. It is responsible for securing both the support vehicle tether (01) and the aircraft tether (02), allowing a circular movement of both. The circular movement of each tether is independent. |
| Support vehicle motor | It is responsible for the acceleration of the support vehicle (10), possibly an electric motor. The power to the electric motor may come from onboard batteries or from a conducting tether. |
| Support vehicle sensors | Driver, sensors, and control software to operate the support vehicle (10) and the electromagnet (12) (or, alternatively operate the lock of the hook and pin). The sensors and software should detect or estimate specific position and attitude of the aircraft, angular positions of the support vehicle (10), as well as the rotational speed of the support vehicle (10) and velocity vector of the aircraft (14) . |

The method of operating the support vehicle (10) for its use in an AWES can be divided into 7 steps, listed below (table 2).

**Table 2: Steps of the method of operating the support vehicle (10) for its use in an AWES.**

| | |
|---|---|
| Step 1: Acceleration | Support vehicle/aircraft pair acceleration (magnets (12, 13) in attraction) . |
| Step 2: Take-off and ascent | Magnets (12, 13) in repulsion, aircraft altitude gaining altitude, support vehicle (10) decelerates. |
| Step 3: Flight | Aircraft (14) flies autonomously and support vehicle (10) stops movement. |
| Step 4: Descent | Support vehicle (10) in acceleration, aircraft (14) decreasing altitude, while flying in a helix. |
| Step 5: Synchronization | Synchronizing support vehicle (10) and aircraft (14) regarding the circular path radius, the angular speed, and the angular position. |
| Step 6: Touch down | Magnets (12, 13) in attraction and touch down. |
| Step 7: Deceleration | Support vehicle (10)/Aircraft (14) pair decelerates and stops. |

In a full operating cycle, the aircraft (14) and support vehicle (10) start at a resting position, stopped, in Step 1, with the magnets (12, 13) in attraction position connecting the aircraft (14) to the support vehicle (10). When the time is ready to initiate the take-off manoeuvre, the support vehicle (10)/aircraft (14) pair starts to accelerate describing a circular motion until reaching a certain threshold take-off speed (that can be determined depending on the aircraft characteristics, on the payload, on the wind conditions, and on the direction in which the flight is to be initiated). When that threshold take-off speed is attained, the magnets (12, 13) switches to repulsion, the aircraft (14) becomes airborne, and starts gaining altitude (Step 2). At this point the support vehicle (10) can start to decelerate until it stops. Then, the aircraft (14) can fly freely, tethered or not, depending on the configuration of the system (Step 3).

When it is time to retrieve the aircraft (14), the support vehicle (10) starts to accelerate, and the aircraft (14) starts the descending procedure. The aircraft (14) flies in a circular motion, while decreasing the altitude (Step 4).

After reaching a determined altitude, both the aircraft (14) and the support vehicle (10) follow a circular motion with the same radius and both vehicles start to synchronize their speeds. The synchronization of the speeds can be achieved with a controller based on the Kuramoto synchronization dynamics [Acebrón, J. A., Bonilla, L. L., Vicente, C. J. P., Ritort, F., & Spigler, R. (2005). The Kuramoto model: A simple paradigm for synchronization phenomena. Reviews of modern physics, 77(1), 137] (Step 5).

When the speeds of the aircraft (14) and the support vehicle (10) are synchronized, the magnets (12, 13) change to attraction (the converse procedure of Step 2). This connects the aircraft (14) to the support vehicle (10): the touch down (Step 6).

Finally, right after touch down, the support vehicle (10)/aircraft (14) decelerates, until reaching the stop position (Step 7).

The reel-in and reel-out of the aircraft tether (02) can be synchronized with the circular motion of the aircraft (14). This means that when the aircraft (14) is reducing altitude, the tether is reeled-in, while when the aircraft is gaining altitude, the tether is reeling-out.

When the aircraft and tethered support vehicle system comprises two or more aircrafts (14) and two or more support vehicles (10), the method of operating the aircraft and tethered support vehicle system further comprises the following steps:
- maintaining the two or more aircrafts (14) and the two or more support vehicles (10) uniformly spaced in terms of angular position,
- synchronizing speeds and curvature radius among the said aircrafts (14) and support vehicles (10), and
- synchronizing altitudes among said aircrafts (14).

Therefore, the aircraft and tethered support vehicle system of the present invention enables an easy and portable implementation for the autonomous take-off and landing (TOL) of a tethered aircraft, using circular TOL.

## Claims

1. An aircraft and tethered support vehicle system for circular take-off and landing of an aircraft, **characterized in that** it comprises at least one aircraft (14), at least one support vehicle (10), an anchorage pole (00) and at least one vehicle tether (01), wherein
- the support vehicle (10) is connected to the anchorage pole (00) via the vehicle tether (01),
- the support vehicle (10) comprises a vehicle electromagnet (12) arranged on a top part thereof,
- the aircraft (14) comprises an aircraft magnet (13) arranged on a bottom part thereof, and
the vehicle electromagnet (12) and the aircraft magnet (13) are configured to connect the support vehicle (10) to the aircraft (14) or to disconnect them or, as an alternative, a seizing device with a hook (15a) and pin (15b) is used to connect the support vehicle (10) to the aircraft (14) or to disconnect them.

2. The aircraft and tethered support vehicle system, according to claim 1, **characterized in that** the support vehicle (10) is a cart-like vehicle or a boat-like vehicle.

3. The aircraft and tethered support vehicle system, according to any of claims 1 and 2, **characterized in that** the support vehicle (10) further comprises a motor, sensors, and a control software.

4. The aircraft and tethered support vehicle system, according to any of the preceding claims 1 to 3, **characterized in that** the aircraft (14) is connected to the anchorage pole (00) via an aircraft tether (02).

5. The aircraft and tethered support vehicle system, according to any of the preceding claims 1 to 4, **characterized in that** the aircraft (14) is connected to a winch (20) via an aircraft tether (02), wherein the aircraft tether (02) goes through an interior of the anchorage pole (00) and it connects to the winch (20) downstream the anchorage pole (00).

6. A method of operating the aircraft and tethered support vehicle system of any of the preceding claims 1 to 5, **characterized in that** it comprises the following steps
for taking-off and flying:
a) connecting the support vehicle (10) to the aircraft (14) by switching on the electromagnet (12) so as to attract the magnet (13) of the aircraft (14), or by locking the hook (15a) and pin (15b);
b) accelerating the support vehicle (10) until a threshold take-off speed is attained;
c) disconnecting the aircraft (14) from the support vehicle (10) by switching off the electromagnet (12), or by unlocking the hook (15a) and pin (15b), so that the aircraft (14) becomes airborne gaining altitude;
d) decelerating the support vehicle (10) until it stops;
for descending and landing:
e) accelerating the support vehicle (10) while decreasing the altitude of the aircraft (14);
f) reaching equal curvature radius for a circular motion of the aircraft (14) and support vehicle (10);
g) aligning vertically the electromagnet (12) of the support vehicle (10) with the magnet (13) of the aircraft (14), or the pin (15b) of the support vehicle (10) with the hook (15a) of the aircraft (14), and synchronizing the speeds of both support vehicle (10) and aircraft (14);
h) connecting the aircraft (14) to the support vehicle (10) by switching on the electromagnet (12), or by locking the hook (15a) and pin (15b), when the aircraft (14) is at an appropriate altitude and position;
i) decelerating the support vehicle (10) until it stops.

7. The method of operating the aircraft and tethered support vehicle system, according to claim 6, **characterized in that** the steps a) to i) are executed automatically by a control system.

8. The method of operating the aircraft and tethered support vehicle system, according to claim 7, **characterized in that** the said steps f) and g) are executed by the control system comprising controllers that are based on Kuramoto synchronization dynamics.

9. The method of operating the aircraft and tethered support vehicle system, according to any of the preceding claims 6 to 8, **characterized in that** it further comprises the following steps when the aircraft and tethered support vehicle system comprises two or more aircrafts (14) and two or more support vehicles (10):
- maintaining the two or more aircrafts (14) and the two or more support vehicles (10) uniformly spaced in terms of angular position,
- synchronizing speeds and curvature radius among the said aircrafts (14) and support vehicles (10), and
- synchronizing altitudes among said aircrafts (14).

10. Use of the aircraft and tethered support vehicle system, of any of the preceding claims 1 to 5, on an airborne wind energy system for the generation of electrical energy.
